# FASCICULE DE BREVET EUROPEEN

(11) **EP 0 505 274 B1**
(45) Date de publication et mention de la délivrance du brevet: **02.11.1994**
(21) Numéro de dépôt: 92400729.7
(22) Date de dépôt: 19.03.1992
(51) Int. Cl.: D01D 5/12, D01D 5/08, D01F 9/08, C03B 37/02, D02G 3/18, B29C 67/14

(54) **Dispositif de fabrication d'un fil composite formé de fibres de renforcement et de matière organique thermoplastique**
Vorrichtung zur Herstellung eines aus Verstärkungsfasern und einem organischen, thermoplastischen Material bestehenden Verbundgarnes
Apparatus for producing a composite yarn made of reinforcing fibres and an organic thermoplastic material

(30) Priorité: 19.03.1991 FR 9103273
(43) Date de publication de la demande: 23.09.1992
(73) Titulaire: VETROTEX FRANCE S.A., F-73000 Chambéry (FR)
(72) Inventeur: Roncato, Giordano, F-73100 Aix les Bains (FR); Fedorowsky, Robert, F-73100 Aix les Bains (FR); Boissonnat, Philippe, F-73230 Barby (FR); Loubinoux, Dominique, F-73000 Chambery (FR)
(74) Mandataire: Breton, Jean-Claude

(56) Documents cités:
- EP-A- 0 367 661
- DE-A- 1 956 860
- US-A- 3 299 469

## Description

La présente invention a trait à un dispositif de fabrication d'un fil composite selon le préambule de la revendication 1. Ce fil est formé de fibres de renforcement, telles que des fibres de verre, et de fibres formées à partir d'une matière organique thermoplastique.

La présente invention est utilisée dans le cadre d'un dispositif de fabrication constitué de deux installations : la première comprenant au moins une filière, alimentée en verre, à partir des orifices de laquelle sont étirés mécaniquement des filaments continus ; la seconde comprenant au moins une tête de filage, alimentée en matière organique thermoplastique, à partir des orifices de laquelle sont étirés mécaniquement des filaments continus. Un tel dispositif est décrit, par exemple, dans la demande de brevet européen EP 0 367 661.

Cette demande de brevet décrit différents exemples d'installations qui, associées, permettent d'obtenir directement un fil composite. Ainsi certaines installations sont agencées de manière que les filaments de verre étirés (assemblés sous la forme de fil ou non) passent à travers une tête de filage délivrant une nappe conique de filaments organiques.

Le dispositif selon la présente invention est plus précisément mis en oeuvre dans le cadre d'une association d'installation de ce dernier type.

Les filaments de verre et les filaments organiques sont étirés à des vitesses pouvant atteindre plusieurs dizaines de mètres par seconde. Dans ces conditions d'étirage, l'air au voisinage des filaments est entraîné et se déplace de manière plus ou moins désordonnée à proximité des installations de fibrage. Lorsque les filaments de verre et les filaments organiques sont étirés de manière que leurs trajets soient coaxiaux, l'entraînement de l'air dans toute cette zone d'étirage est particulièrement marqué. C'est notamment le cas au niveau de la tête de filage délivrant des filaments organiques. Cette tête de filage et ce qui l'entoure est un obstacle à l'écoulement de l'air induit par les différents filaments. Ceci provoque une convection plus ou moins bien contrôlée notamment à proximité de l'étirage des filaments organiques. Ce phénomène perturbe le refroidissement desdits filaments et peut être à l'origine d'une fluctuation du diamètre des filaments étirés, voire d'une rupture d'un ou plusieurs filaments. Ceci se traduit par une variation localisée du pourcentage de matière organique par rapport au verre, ce qui est parfois un inconvénient lorsque le fil composite fabriqué est employé pour réaliser directement un produit composite.

Le dispositif selon l'invention a pour objet, dans le cadre d'une installation où les filaments de verre et les filaments organiques sont étirés de manière coaxiale, de contrôler l'écoulement de l'air entraîné par les différents filaments.

Le dispositif selon l'invention a pour objet, dans le cadre d'une telle installation, de régulariser les courants de convection de l'air dans la zone de formation des filaments organiques.

Le dispositif selon l'invention a également pour objet d'homogénéiser la vitesse de refroidissement des filaments organiques.

L'objet de l'invention est atteint grâce à un dispositif de fabrication d'un fil composite, constitué d'une part, d'une première installation comprenant au moins une filière alimentée en verre et chauffée par effet Joule, dont la face inférieure est munie d'une multiplicité d'orifices à partir desquels sont étirés des filaments continus, cette (ou ces) tête (s) de filage étant protégée (s) par un capot dont la partie supérieure s'adapte au-dessus de ladite (ou desdites) tête (s) et a extérieurement la forme d'un coffre, muni à son sommet d'une ouverture située dans l'axe du passage central, et dont la partie inférieure est formée d'une paroi qui entoure la (ou les) tête (s) de filage et se prolonge au-dessous du niveau de la face inférieure de ladite (ou desdites têtes).

L'objet de l'invention est également atteint du fait que la partie inférieure du capot abrite, au moins en partie, un dispositif de soufflage d'un fluide gazeux, dont la (ou les) extrémité (s) est (sont) munie (s) d'un ou d'une multiplicité d'orifices qui s'ouvrent en direction de la zone de formation des filaments organiques, la (ou lesdites) extrémité (s) étant placée (s) entre le passage central et ladite zone et/ou entre la paroi inférieure du capot et ladite zone.

Le capot surmontant et entourant la ou les têtes de filage a pour effet de guider les écoulements de l'air entraîné par les filaments de verre et de les éloigner de la zone où se forment les filaments organiques. Il assure également une protection des filaments thermoplastiques très fragiles dans la zone sous filière où ils sont encore à l'état visqueux. Le capot assure aussi une protection contre les particules de matière entraînées par le fil ou les filaments de verre, telles que fibrilles de verre ou microgouttelettes d'ensimage.

Le dispositif de soufflage du fluide permet à la fois de refroidir les filaments organiques lors de leur formation et de stabiliser l'écoulement de l'air à proximité des orifices par où est extrudée la matière organique.

Dans le cadre de l'invention, la deuxième installation du dispositif de fabrication du fil composite peut comprendre plusieurs têtes de filage. Ainsi la deuxième installation peut comprendre trois, voire même quatre têtes de filage classiques, c'est-à-dire ayant la forme d'un parallélépipède. Elles sont disposées à proximité les unes des autres, de manière que leurs parois latérales définissent un passage central de forme globalement prismatique de section triangulaire ou carrée.

L'une des parois latérales de ces têtes de filage peut être incurvée. Les têtes de filage sont alors disposées, par deux ou par trois, de manière à définir un passage central de forme globalement cylindrique.

La deuxième installation peut comprendre une seule tête de filage, munie d'un passage central, et présentant extérieurement une forme annulaire comme celle décrite dans la demande de brevet précédemment citée, ou prismatique ou autre. Le passage central de cette tête peut avoir une forme différente de celle définie par sa paroi latérale externe, par exemple cylindrique alors la paroi externe définit une forme prismatique.

Dans certains cas cette tête de filage n'est pas entièrement fermée et comprend deux extrémités qui délimitent un passage latéral permettant un libre accès vers le passage central. Ceci peut être avantageux dans certaines installations comme cela sera explicité dans la description détaillée.

La partie supérieure du capot qui surmonte la ou les têtes de filage est formée d'une ou plusieurs parois latérales inclinées par rapport à l'axe du passage central. Ainsi le capot peut avoir, par exemple, la forme d'un tronc de cône ou d'un prisme tronqué dont la grande base recouvre la ou les têtes de filage. Cette ou ces parois latérales inclinées ont pour effet de dévier vers l'extérieur de la zone de filage au moins une partie de l'air entraîné par les filaments de verre et d'éliminer ainsi l'une des causes de la marche irrégulière de la tête de filage.

Malgré cette configuration particulière du capot, une partie de l'air entraîné par les filaments de verre pénètre à l'intérieur dudit capot par l'ouverture située à son sommet. Cet air peut être évacué, au moins en partie, par une ou plusieurs ouvertures latérales qui s'ouvrent vers l'extérieur de préférence à la base de la paroi latérale. Cette ou ces ouvertures se présentent, par exemple, sous forme d'une ou plusieurs fentes horizontales.

La base de la partie supérieure du capot peut être matérialisée par une plaque plane qui s'adapte au-dessus de la ou desdites têtes de filage. Cette plaque comporte en son centre une ouverture située dans l'axe du passage central.

La partie supérieure du capot peut comporter une paroi perforée d'orifices qui s'étend, à l'intérieur dudit capot, du bord de l'ouverture située à son sommet jusqu'à la zone supérieure du passage central.

Le capot peut comporter une paroi interne, par exemple de forme cylindrique ou prismatique, dont la section droite est égale ou inférieure à celle du passage central de la ou des têtes de filage, et qui s'étend du sommet dudit passage central jusqu'au moins au niveau de la base de la paroi qui constitue extérieurement la partie inférieure du capot. Cette paroi interne est pleine. Elle peut se raccorder au bord de l'ouverture située au centre de la plaque qui sert de base à la partie supérieure du capot. Elle peut aussi se raccorder à la base de la paroi interne qui s'étend du sommet du capot jusqu'à la partie supérieure du passage central. Dans ce mode de réalisation le capot comporte une paroi interne, qui s'étend d'une seule pièce du bord de l'ouverture située à son sommet jusqu'au niveau de la base de la paroi qui constitue extérieurement la partie inférieure du capot. Cette paroi interne, de forme cylindrique ou prismatique, peut présenter sur toute sa hauteur une section droite inférieure ou égale à celle du passage central ; sa partie supérieure sera perforée d'orifices, sa partie inférieure sera pleine.

Le dispositif de soufflage peut être constitué par une ou plusieurs canalisations d'amenée de fluide, reliées à un ou plusieurs conduits disposés au-dessus de la ou desdites têtes de filage, qui se prolongent le long de la paroi latérale de la ou desdites têtes délimitant le passage central et aboutissent à un orifice ou à une multiplicité d'orifices orientés vers la zone de formation des filaments organiques.

La ou les canalisations d'amenée du fluide peuvent être reliées à des conduits qui descendent le long de la paroi latérale externe de la ou des têtes de filage ; ils peuvent également longer intérieurement la paroi qui forme la partie inférieure du capot.

L'extrémité du ou des conduits peut s'achever par au moins une fente qui s'ouvre au-dessous du niveau de la face inférieure de la ou des têtes de filage ; ces fentes sont droites, incurvées, voire même annulaires selon la disposition des orifices de la ou des têtes de filage. Un diffuseur est avantageusement disposé en amont de chaque fente afin de distribuer le fluide gazeux de manière homogène à proximité des filaments organiques.

Les extrémités de ces conduits peuvent également aboutir à une chambre de détente du fluide, ou s'évaser pour former une chambre dans laquelle le fluide gazeux se répartit. Cette chambre présente une paroi orientée vers la zone de formation des filaments organiques, qui est percée d'une multiplicité d'orifices ou qui est constituée d'une grille sur au moins une partie de sa hauteur. Cette chambre peut être disposée entre la zone parcourue par les filaments de verre, au-dessous du passage central, et la zone de formation des filaments organiques. Elle peut être aussi disposée entre la paroi formant la partie inférieure du capot et la zone de formation des filaments organiques.

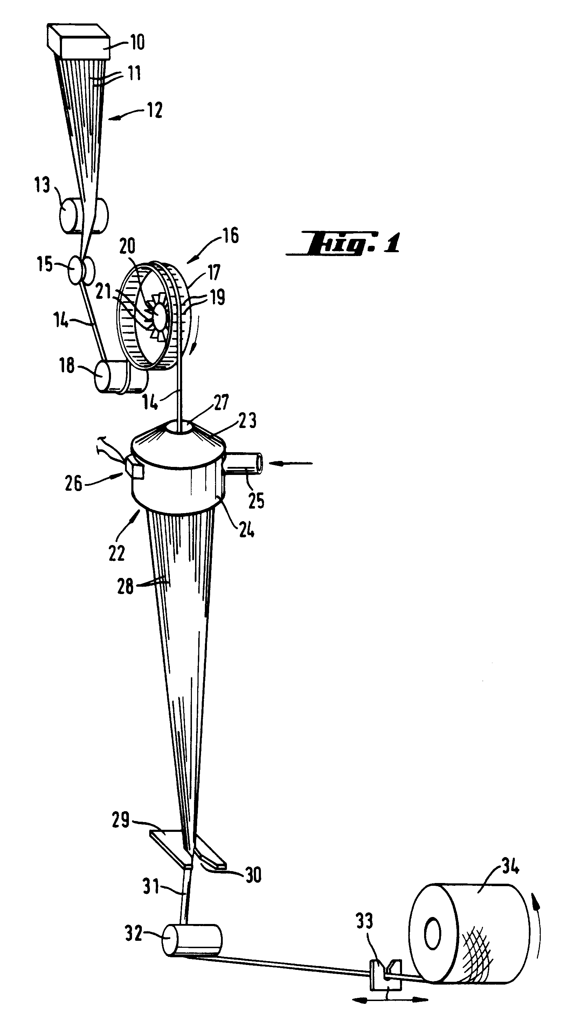

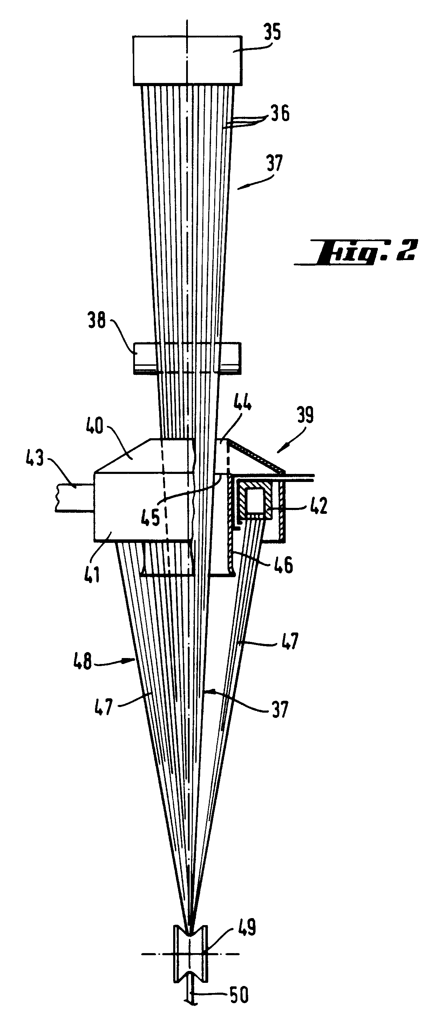

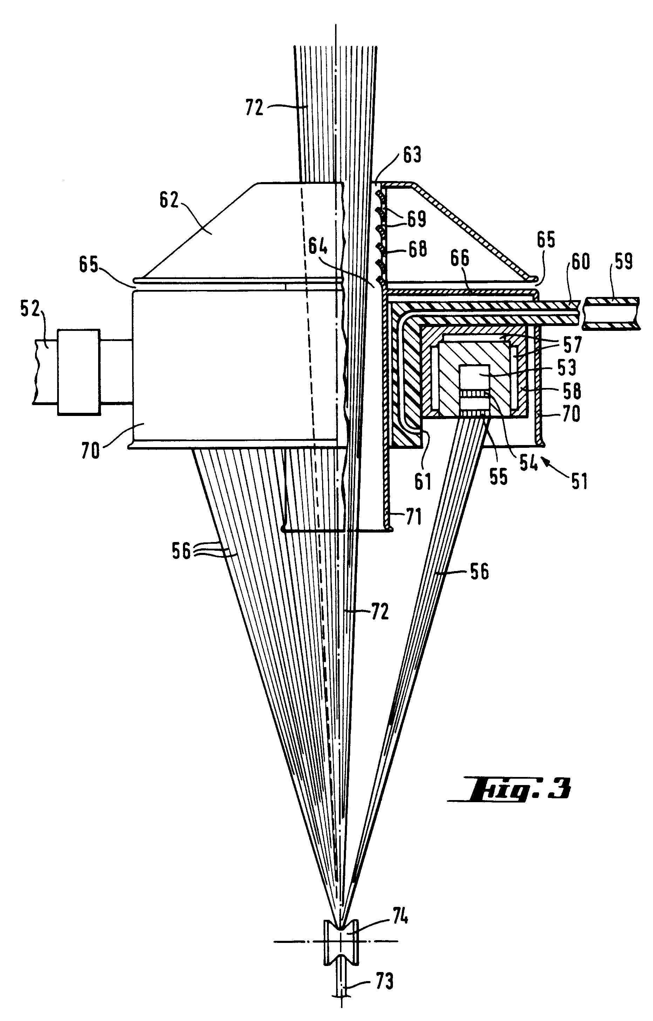

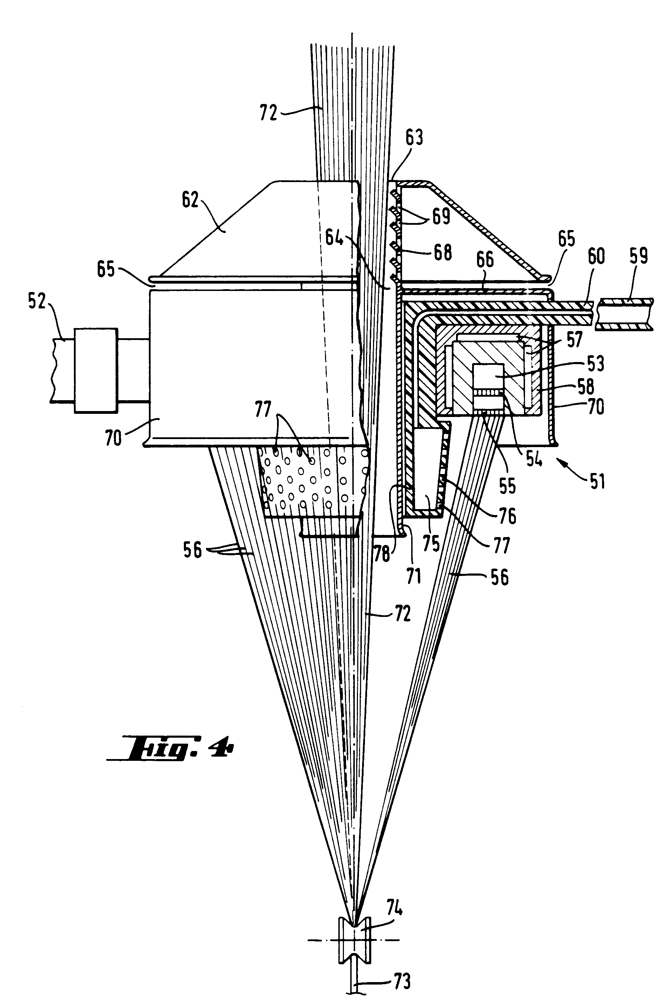

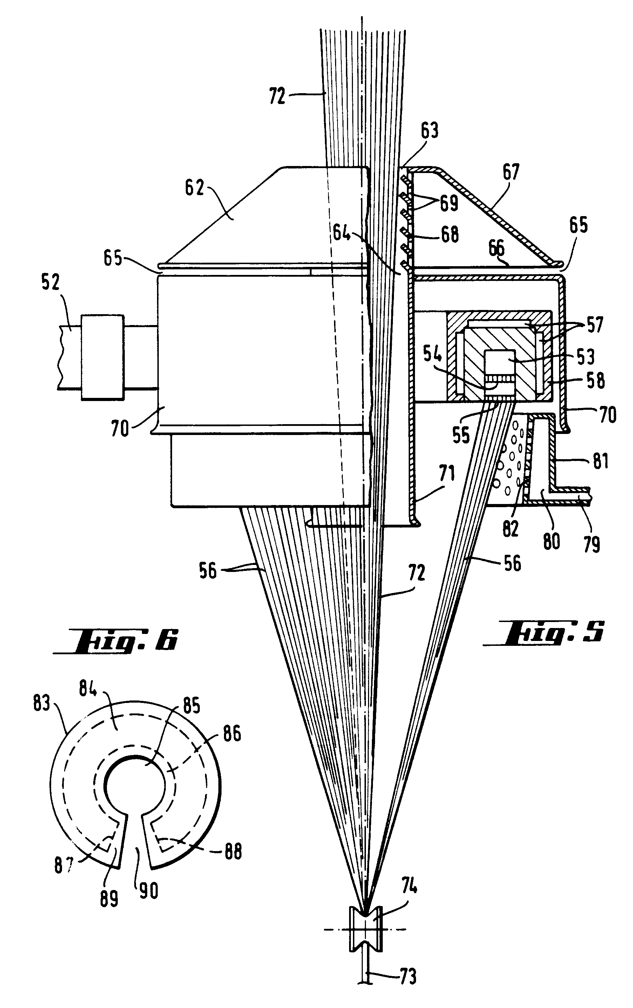

Le dispositif selon l'invention sera mieux apprécié grâce à la description détaillée qui suit, illustrée par les figures suivantes :
. **la figure 1** est une vue schématique générale d'un dispositif de fabrication d'un fil composite au sein duquel est mise en oeuvre l'invention,
. **la figure 2** est une vue schématique partielle d'une configuration du dispositif de fabrication d'un fil composite au sein duquel est mise en oeuvre l'invention,
. **la figure 3** est une vue schématique d'un mode de réalisation de l'invention dans le cadre du dispositif illustré figure 2,
. **la figure 4** est une vue schématique d'un second mode de réalisation de l'invention,
. **la figure 5** est une vue schématique d'un troisième mode de réalisation de l'invention,
. **la figure 6** est une vue schématique partielle en plan d'une variante susceptible de s'appliquer aux modes de réalisation illustrés par les figures 3 à 5.

La figure 1 représente l'association de deux installations, l'une produisant des filaments de verre et l'autre des filaments organiques.

La première installation comprend un ensemble de dispositifs permettant d'obtenir par étirage mécanique des filaments continus de verre.

La filière schématisée en 10 est normalement reliée à une source d'alimentation en verre. Cette source peut être l'avant-corps d'un four qui achemine directement le verre en fusion jusqu'au sommet de la filière 10 ; ce peut-être aussi une trémie contenant du verre froid, obtenu et stocké, par exemple sous forme de billes, qui alimente par simple gravitation ladite filière.

Dans l'un ou l'autre cas, la filière 10 est généralement en alliage platine-rhodium, et chauffée par effet Joule. Cette filière permet de refondre le verre ou de le maintenir à une température élevée, afin qu'il arrive à une viscosité convenant à son étirage.

Le verre fondu s'écoule sous forme de filet des nombreux orifices disposés à la base de la filière. Ces filets de verre sont immédiatement étirés en de multiples filaments continus 11 regroupés en une seule nappe 12. Ces filaments sont enduits d'un apprêt ou d'un ensimage par un dispositif symbolisé par le rouleau 13. Ce dispositif peut être constitué d'un bac, alimenté en permanence par un bain d'apprêt ou d'ensimage, dans lequel baigne la partie inférieure d'un rouleau en rotation. Ce rouleau se recouvre d'une pellicule d'apprêt ou d'ensimage qui est prélevé au passage par les filaments venant en contact avec sa surface. L'ensimage déposé par ce dispositif a pour but de favoriser l'adhérence des fibres de verre à la matière organique. De nombreuses formulations d'ensimage de ce type sont connues, telles que celles décrites dans le brevet français FR 2 167 771. Les filaments 11 peuvent également être revêtus d'un apprêt comprenant au moins un photo-amorceur, susceptible d'initier une transformation chimique dudit apprêt sous l'action d'un rayonnement actinique. La demande de brevet, publiée en FRANCE sous le numéro 2 597 856, décrit des formules d'apprêt susceptibles d'être utilisées dans le cadre de la présente invention, comme celles définies dans les exemples 8 et 12 de ladite demande.

Après être revêtus d'ensimage ou d'apprêt, les filaments 11 sont réunis en un fil unique 14 par un dispositif d'assemblage 15 ; ce dispositif peut être une roulette à gorge. Le fil 14 et en amont les filaments 11, sont entraînés et étirés mécaniquement par un dispositif 16 animé d'un mouvement de rotation par un moteur non représenté. Ce dispositif, bien connu, est par exemple décrit de façon détaillée dans le brevet US-A-3 265 482. Il est constitué d'une roue d'étirage 17 et d'un dispositif de guidage 18 du fil. Le dispositif 18 est implanté de manière à plaquer le fil 14 à la périphérie de la roue 17 sur une longueur suffisante pour provoquer l'entraînement dudit fil par simple friction. La périphérie de la roue 17 comporte une série de fentes transversales 19 régulièrement espacées.

Une seconde roue 20, de plus faible diamètre que la roue 17 et munie à sa périphérie d'ailettes rayonnantes 21, est implantée à l'intérieur de ladite roue. La roue 20 est excentrée par rapport à la roue 17 de manière à ce que les extrémités des ailettes 21 passent à travers les fentes 19. La roue 20 est animée d'un mouvement de rotation synchronisé avec celui de la roue 17, à l'aide d'un dispositif de transmission ou d'une liaison mécanique non représentée. Sous l'action conjuguée des roues 17 et 20, le fil 14 est entraîné mécaniquement puis décollé de la roue 17 grâce aux ailettes 21. A partir de sa zone de décollement, le fil suit un trajet sensiblement tangentiel à la roue 17. Le trajet du fil projeté peut être ainsi déterminé avec précision en choisissant en conséquence la position de la roue 20.

La deuxième installation 22 comprend le dispositif selon l'invention dont la figure 1 montre seulement l'aspect extérieur.

Ce dispositif est formé d'un capot constitué d'un tronc de cône 23 prolongé à la périphérie de sa base par une paroi cylindrique 24. Ce capot protège une tête de filage de forme annulaire (non représentée), le tronc de cône 23 surmontant ladite tête et la paroi 24 entourant sa paroi latérale externe. Cette tête de filage est alimentée sous pression en polymère thermoplastique à l'état fondu. L'arrivée du polymère est symbolisée par le conduit 25. Sur la paroi cylindrique du capot sont schématisés un boitier et des fils 26 qui symbolisent un dispositif d'alimentation en courant électrique. Ce dispositif permet de chauffer, à l'aide de résistances électriques, les parois de la filière annulaire.

Le capot comporte à son sommet une ouverture circulaire 27 dans l'axe de laquelle le fil 14 est projeté.

Par extrusion puis étirage mécanique, il se forme une nappe de filaments organiques 28 apparaissant de l'extérieur comme un cône dont la pointe est dirigée vers le bas. Le fil 14 étant projeté dans l'axe dudit cône, sa pointe correspond à la zone d'assemblage de l'ensemble des filaments organiques et dudit fil 14.

Un dispositif d'assemblage 29, muni d'une simple encoche 30 provoque la réunion physique du fil 14 et des filaments 28 et donne naissance à un fil composite 31.

Après guidage par le dispositif 32, le fil 31 est bobiné directement sur un support en rotation non représenté. Le fil 31 est réparti sur ce support par un dispositif guide-fil, symbolisé par la plaque à encoche 33, animé d'un mouvement de va-et-vient schématisé par la double flèche. Le produit obtenu dans cet exemple est un enroulement à flancs droits 34.

Lorsque l'apprêt déposé sur les filaments 11 est susceptible de réagir sous l'action d'un rayonnement actinique comme le rayonnement ultra-violet, il est possible d'implanter une source émettant des U.V. sur le trajet du fil composite, par exemple entre le dispositif d'assemblage 29 et le dispositif de guidage 32. La transformation au moins partielle de l'apprêt sous l'action de ce rayonnement a pour effet d'augmenter la cohésion du fil composite obtenu.

La figure 2 illustre un autre mode d'association des installations dans le cadre de laquelle peut être mise en oeuvre l'invention.

La filière 35, similaire à la filière 10, délivre une multiplicité de filaments de verre 36, qui forment une nappe unique 37. Ces filaments sont revêtus d'un ensimage ou d'un apprêt grâce au dispositif symbolisé par le rouleau 38. La filière 35 et le dispositif 38 sont disposés au-dessus de l'installation 39 et approximativement dans l'axe vertical de ladite installation.

Comme dans la configuration des dispositifs de fibrage illustrée par la figure 1, la deuxième installation comprend un capot formé d'un tronc de cône 40 prolongé à la périphérie de sa base par une paroi cylindrique 41. Ce capot abrite une tête de filage annulaire 42 alimentée sous pression en polymère thermoplastique à l'état fondu par l'intermédiaire du conduit thermostaté 43. Le tronc de cône 40 comporte à son sommet et à sa base deux ouvertures circulaires 44 et 45 ayant le même axe que la tête de filage 42. L'ouverture 45 se prolonge vers le bas par un cylindre 46 solidaire de la base du tronc de cône 40 et qui passe à travers le passage central de la tête de filage 42.

Les filaments organiques 47 sont étirés mécaniquement à partir de la tête 42 sous la forme d'une nappe conique 48. Les nappes 37 et 48 sont réunies par la roulette d'assemblage 49 à partir de laquelle se forme un fil composite 50.

La figure 3 représente schématiquement, en partie en coupe transversale, la deuxième installation de filage du dispositif de fabrication d'un fil composite dans la configuration illustrée par la figure 2.

Cette installation comprend une tête de filage annulaire 51, alimentée en matière organique thermoplastique à l'aide d'une extrudeuse. Cette matière, par exemple un polypropylène, est fondue dans l'extrudeuse puis transportée à l'état liquide par l'intermédiaire du conduit 52 jusqu'à la chambre d'extrusion 53 de la tête 51. Sous la pression exercée, la matière traverse une grille 54 et s'écoule par les orifices 55 répartis sur une plaque filière en forme d'anneau à la base de la tête 51. La matière extrudée est aussitôt étirée mécaniquement par un dispositif non représenté en une multiplicité de filaments continus 56. La matière est maintenue dans l'état de fluidité nécessaire grâce à des moyens de chauffage, tels que des résistances électriques 57 disposées sur les différentes parois de la tête 51.

Les parois de la tête 51 et les moyens de chauffage 57 sont entourés d'une couche d'isolant thermique tel qu'une couche d'amiante 58.

Une ou plusieurs canalisations 59 sont branchées à une source de fluide gazeux sous pression, par exemple de l'air provenant d'une soufflante régulée en vitesse et réglant le débit. Cette canalisation est reliée à un ou plusieurs conduits 60 qui longent le sommet de la tête 51 et sa paroi latérale interne. Un diffuseur (non représenté) est avantageusement implanté à l'intérieur desdits conduits. Après un coude, l'extrémité 61 de ce conduit s'ouvre au-dessous de la base de la tête de fibrage, dirigée vers la zone de formation des filaments 56. La ou les canalisations 59 peuvent être reliées à d'autres conduits qui longent la paroi latérale externe de la tête de fibrage 51 et dont les extrémités sont également dirigées vers la zone de formation des filaments 56.

Cet ensemble est protégé par un capot formé extérieurement d'une paroi tronconique 62 pour sa partie supérieure et d'une paroi cylindrique 70 pour sa partie inférieure.

La partie supérieure du capot est fermée à sa base par une plaque 66, raccordée à la paroi 62, qui s'adapte au-dessus de la tête de filage 51. Cette partie supérieure comprend deux ouvertures circulaires 63 et 64, de même diamètre, la première à son sommet, la seconde au centre de la plaque 66. Ces deux ouvertures sont reliées par une paroi cylindrique 68, percée d'une multiplicité d'orifices 69. Cette paroi peut être constituée par une simple grille. Plusieurs fentes horizontales 65 sont prévues près de la plaque 66, à la partie inférieure de la paroi 62.

Les fentes 65 peuvent être remplacées par un ou plusieurs orifices qui sont reliés à un dispositif d'aspiration. Ainsi, en fonction de l'aspiration effectuée, il est possible de contrôler la quantité d'air entraîné à travers l'ouverture 64.

La partie inférieure du capot, formée extérieurement par la paroi 70, enveloppe complètement la tête de filage 51 et son équipement. Cette partie inférieure comporte également une paroi interne pleine 71, ici de forme cylindrique. Sa section droite est inférieure à celle du passage central de la tête 51. Cette paroi 71 est solidaire de la plaque 66 et elle s'étend au-dessous de la base de la paroi cylindrique 70 qui s'arrête elle-même au-dessous des orifices 55 de la tête de filage 51.

L'air entraîné par la nappe 72 des filaments de verre est en grande partie dévié par l'extérieur par la paroi 62. Une partie de l'air qui passe à travers l'ouverture 63 est évacué par les ouvertures 65 via les orifices 69. L'air qui est encore entraîné par les filaments de verre passant dans le cylindre 71 s'échappe à un niveau suffisamment éloigné pour ne pas perturber la zone de fibrage des filaments organiques 56. Comme indiqué précédemment, la quantité d'air entraîné par les filaments à ce niveau peut être contrôlée grâce à une aspiration de l'air à la partie supérieure du capot. L'atmosphère de cette zone est contrôlée par la diffusion de l'air émanant des extrémités 61 des conduits 60.

La figure 4 montre un autre mode de réalisation de l'invention dans une installation semblable à celle représentée à la figure 3. La différence réside au niveau du dispositif de soufflage.

Le ou les conduits 60 d'amenée du fluide gazeux, après avoir longé le sommet de la tête de filage 51 et sa paroi latérale interne, aboutissent dans une chambre de détente 75. Cette chambre présente une paroi 76 orientée vers la zone de formation des filaments organiques 56 et perforée d'un grand nombre d'orifices 77. Le sommet de cette chambre est proche du niveau des orifices 55 de la tête 51 ; sa base est à un niveau inférieur à celui de la base de la paroi externe 70. La paroi 76 présente extérieurement une forme tronconique.

A l'opposé de la paroi 76, la chambre 75 est délimitée par une paroi pleine 78. Cette paroi 78, cylindrique dans cet exemple de réalisation, et la paroi interne des conduits 60 qui la prolongent vers le haut, peuvent remplacer la paroi interne 71.

La figure 5 montre un troisième mode de réalisation de l'invention dans une installation où le capot et la tête de filage sont semblables à ceux représentés dans l'installation de la figure 3.

Les conduits 79 du fluide gazeux arrivent à la base d'une chambre de détente 80 qui présente extérieurement une forme cylindrique. La partie inférieure de la paroi 70 enveloppe le sommet de la chambre 80 qui est situé à proximité des orifices 55. La paroi externe 81 de ladite chambre prolonge vers le bas la paroi 70.

La chambre 80 présente une paroi interne 82 orientée vers la zone de formation des filaments organiques 56 et perforée d'un grand nombre d'orifices. Cette paroi présente une forme tronconique.

Lorsque les filaments 56 sont étirés à grande vitesse, il est préférable d'utiliser un dispositif de soufflage comprenant une chambre de détente, selon l'un des modes de réalisation illustrés par les figures 4 et 5. Ces chambres ont pour fonction de répartir le fluide gazeux, généralement de l'air, sur une grande surface. L'air est ainsi diffusé à vitesse faible et relativement constante dans toute la zone de formation des filaments 56, ce qui a pour effet de régulariser l'opération de filage. Afin d'uniformiser le mieux possible la diffusion de l'air, les parois 76, 82 sont avantageusement constituées d'une ou plusieurs couches de tissu métallique ou de matériau poreux.

La figure 6 est une vue très schématique en plan d'un mode de réalisation particulier de l'invention.

Elle montre la partie tronconique 83 de la partie supérieure d'un capot qui surmonte une tête de filage 84 indiquée en pointillé. Pour simplifier la vue, les différents équipements environnant la tête 84 ne sont pas représentés.

Le capot présente à son sommet une ouverture circulaire 85 coaxiale au passage central 86 de la tête de filage. Cette tête n'est pas complètement annulaire mais plutôt en forme de fer à cheval. Ses deux extrémités 87 et 88 définissent un passage latéral 89.

Le capot est également ouvert sur toute sa hauteur. Cette ouverture concerne la paroi externe 70 telle que décrite précédemment ainsi que la partie supérieure tronconique et la paroi interne 71. Ceci est symbolisé par le passage 90. Les dispositifs de soufflage présentent évidemment une discontinuité similaire.

Après un arrêt de la filière délivrant des filaments de verre, cette configuration permet, au moment de la remise en marche de ladite filière, de replacer aisément les filaments de verre au centre de la deuxième installation.

Les modes de réalisation décrits précédemment ne sont pas limitatifs de l'invention. L'homme de métier pourra, en particulier, modifier la forme du capot et lui associer un ou plusieurs dispositifs de soufflage sans sortir du cadre de la présente invention.

## Revendications

1. Dispositif de fabrication d'un fil composite (31, 50, 73), constitué d'une part, d'une première installation comprenant au moins une filière (10, 35) alimentée en verre et chauffée par effet Joule, dont la face inférieure est munie d'une multiplicité d'orifices à partir desquels sont étirés des filaments continus (11, 36, 72), d'autre part, d'une deuxième installation comprenant une (ou plusieurs) tête (s) de filage (42, 51, 84), alimentée (s) sous pression en matière organique thermoplastique à l'état fondu, qui comporte (ou délimitent) un passage central à travers lequel les filaments de verre (11, 36, 72) sont étirés, ladite (ou lesdites) tête (s) de filage (42, 51, 84) comprenant au moins un conduit d'alimentation (25, 43, 52) de la matière, **caractérisé en ce que** ledit conduit est relié à une chambre (53) qui débouche sur une multiplicité d'orifices (55) sur sa face inférieure à travers lesquels la matière est extrudée et donne naissance par étirage à des filaments continus (28, 47, 56), cette (ou ces) tête (s) de filage étant protégée (s) par un capot dont la partie supérieure s'adapte au-dessus de ladite (ou desdites) tête (s) et a extérieurement la forme d'un coffre (23, 40, 62), muni à son sommet d'une ouverture (27, 44, 63) située dans l'axe du passage central, et dont la partie inférieure est formée d'une paroi (24, 41, 70) qui entoure la (ou les) tête (s) de filage et se prolonge au-dessous du niveau de la face inférieure de ladite (ou desdites) tête (s).

2. Dispositif de fabrication selon la revendication 1, **caractérisé en ce que** la partie inférieure du capot abrite, au moins en partie, un dispositif de soufflage d'un fluide gazeux, dont la (ou les) extrémité (s) est (sont) munie (s) d'un ou d'une multiplicité d'orifices (61, 77) qui s'ouvrent en direction de la zone de formation des filaments organiques (56), la (ou lesdites) extrémité (s) étant placée (s) entre le passage central et ladite zone et/ou entre la paroi inférieure du capot (70) et ladite zone.

3. Dispositif selon la revendication 1, **caractérisé en ce que** la partie supérieure du capot est formée extérieurement d'une ou plusieurs plaques (23, 40, 62) inclinées par rapport à l'axe vertical du passage central.

4. Dispositif selon la revendication 3, **caractérisé en ce que** la partie supérieure du capot à la forme d'un tronc de cône (23, 40, 62) ou d'un prisme tronqué.

5. Dispositif selon l'une des revendications 3 et 4, **caractérisé en ce que** la partie supérieure du capot est munie d'au moins une ouverture latérale (65).

6. Dispositif selon la revendication 5, **caractérisé en ce que** la (ou les) ouverture (s) latérale (s) (65) est (sont) constituée (s) par une fente ou une série de fentes.

7. Dispositif selon l'une des revendications 3 à 6, **caractérisé en ce que** la partie supérieure du capot est fermée à sa base par une plaque (66) qui s'adapte au-dessus de la ou des têtes de filage (51) et qui est munie en son centre d'une ouverture (64) située dans l'axe du passage central.

8. Dispositif selon l'une des revendications 3 à 7, **caractérisé en ce que** la partie supérieure du capot comporte une paroi interne (68) perforée d'orifices (69) qui s'étend, à l'intérieur dudit capot, du bord de l'ouverture (63) située au sommet du capot jusqu'au sommet du passage central de la (ou des) tête (s) de filage ou jusqu'au bord de l'ouverture (64) de la plaque (66) fermant la base de ladite partie supérieure.

9. Dispositif selon l'une des revendications 1 et 2, **caractérisé en ce que** le capot comprend une paroi interne, pleine (46, 71), dont la section droite est égale ou inférieure à celle du passage central de la (ou des) tête (s) de filage, et qui s'étend du sommet dudit passage central, ou du bord de l'ouverture (64) de la plaque (66) fermant la base de la partie supérieure dudit capot, jusqu'au moins au niveau de la base de la paroi (41, 70) qui constitue extérieurement la partie inférieure du capot.

10. Dispositif selon les revendications 8 et 9, **caractérisé en ce que** le capot comprend une paroi interne (68, 71) de forme cylindrique ou prismatique, dont la section droite est égale ou inférieure à celle du passage central de la (ou des) tête (s) de filage, et qui s'étend du bord de l'ouverture (63) située au sommet du capot jusqu'au niveau de la base de la paroi (70) qui constitue extérieurement la partie inférieure du capot, la partie supérieure (68) de ladite paroi interne étant percée d'une multiplicité d'orifices (69).

11. Dispositif selon la revendication 2, **caractérisé en ce qu'**il comprend au moins un dispositif de soufflage constitué par une ou plusieurs canalisations (59) d'amenée de fluide, reliées à un ou plusieurs conduits (60) disposés au-dessus de la (ou desdites) tête (s) de filage (51), qui se prolongent le long de la paroi latérale de ladite (ou desdites) tête (s) délimitant le passage central et aboutissent à un orifice ou une multiplicité d'orifices (61) orientés vers la zone de formation des filaments organiques.

12. Dispositif selon la revendication 11, **caractérisé en ce que** l'extrémité du ou des conduits (60) s'achève par au moins une fente (61) qui s'ouvre au-dessous du niveau de la face inférieure de la (ou desdites) tête (s) (51).

13. Dispositif selon la revendication 11, **caractérisé en ce que** l'extrémité du ou des conduits (60) aboutit dans au moins une chambre de détente (75) du fluide gazeux dont la paroi (76) orientée vers la zone de formation des filaments organiques (56) est percée d'une multiplicité d'orifices (77) sur au moins une partie de sa hauteur ou est constituée d'une ou plusieurs couches de tissu métallique ou de matériau poreux sur au moins une partie de sa hauteur.

14. Dispositif selon la revendication 13, **caractérisé en ce que** la paroi (78) de la chambre de détente, orientée vers le passage central, constitue également au moins une partie d'une paroi interne de forme cylindrique ou prismatique, dont la section droite est égale ou inférieure à celle du passage central et qui s'étend du sommet dudit passage jusqu'au moins au niveau de la paroi (70) qui constitue extérieurement la partie inférieure du capot.

15. Dispositif selon l'une des revendications 2 à 10, **caractérisé en ce qu'**il comprend au moins un dispositif de soufflage d'un fluide gazeux, constitué par au moins un conduit (79) d'amenée dudit fluide, débouchant dans au moins une chambre de détente (80) dudit fluide disposée à la périphérie de la zone de formation des filaments organiques (56), ladite chambre possédant une paroi (82) tournée vers ladite zone et perforée d'une multiplicité d'orifices sur au moins une partie de la hauteur ou formée d'une ou plusieurs couches de tissu métallique ou de matériau poreux sur au moins une partie de sa hauteur.

16. Dispositif selon la revendication 15, **caractérisé en ce que** la chambre de détente (80) du fluide présente une paroi externe (81) qui prolonge vers le bas, au moins sur une partie de sa hauteur la paroi externe (70) formant la partie inférieure du capot.

17. Dispositif selon la revendication 1, **caractérisé en ce que** la seconde installation comprend une ou plusieurs têtes de filage (84) dont l'implantation ou la forme présente sur toute leur hauteur un passage latéral (90) entre l'extérieur de ladite installation et le passage central (86) de la ou desdites têtes, **et qu**'elle comprend un capot et un dispositif de soufflage qui présentent sur toute leur hauteur un passage latéral dans le prolongement du passage latéral de la ou desdites têtes.

## Claims

1. Device for manufacturing a composite thread (31, 50, 73), firstly comprising a first installation comprising at least one die (10, 35) supplied with glass and heated by the Joule effect, of which the lower face is provided with a large number of apertures from which continuous filaments (11, 36, 72) are drawn, and secondly comprising a second installation comprising one (or more) extrusion head (heads) (42, 51, 84) supplied under pressure with thermoplastic organic material in the molten state, which comprises (or delimit) a central passage through which the glass filaments (11, 36, 72) are drawn, said extrusion head (or heads) (42, 51, 84) comprising at least one conduit (25, 43, 52) for supplying the material, characterised in that the conduit is connected to a chamber (53) which opens into a large number of apertures (55) on its lower face through which the material is extruded and, by a drawing process, produces continuous filaments (28, 47, 56), this extrusion head (or these heads) being protected by a hood of which the upper section fits over said head (or heads) and externally has the shape of a chest (23, 40, 62), provided at its top with an opening (27, 44, 63) located on the axis of the central passage, and of which the lower section is formed by a wall (24, 41, 70) which surrounds the extrusion head (or heads) and is extended below the lower face of said head (or heads).

2. Manufacturing device according to Claim 1, characterised in that the lower section of the hood at least partially protects a device for blowing a gaseous fluid, of which the end (or ends) is (are) provided with one or more apertures (61, 77) which open in the direction of the organic filament formation area (56), the end (or ends) being located between the central passage and said area and/or between the lower wall of the hood (70) and said area.

3. Device according to Claim 1, characterised in that the upper part of the hood is formed externally by one or more plates (23, 40, 62) inclined relative to the vertical axis of the central passage.

4. Device according to Claim 3, characterised in that the upper section of the hood is in the shape of a truncated cone (23, 40, 62) or a truncated prism.

5. Device according to either of Claims 3 and 4, characterised in that the upper section of the hood is provided with at least one side opening (65).

6. Device according to Claim 5, characterised in that the side opening (or openings) (65) is (are) formed by a slot or a series of slots.

7. Device according to any one of Claims 3 to 6, characterised in that the upper section of the hood is closed at its base by a plate (66) which fits above the extrusion head or heads (51) and which is provided in its centre with an opening (64) located on the axis of the central passage.

8. Device according to any one of Claims 3 to 7, characterised in that the upper section of the hood comprises an inner wall (68), perforated by apertures (69), which extends, inside said hood, from the edge of the opening (63) at the top of the hood to the top of the central passage of the extrusion head or heads or to the edge of the opening (64) of the plate (66) closing the base of said upper section.

9. Device according to either of Claims 1 and 2, characterised in that the hood comprises a solid inner wall (46, 71), of which the cross-section is equal to or less than that of the central passage of the extrusion head (or heads), and which extends from the top of said central passage, or from the edge of the opening (64) in the plate (66) closing the base of the upper section of said hood, to at least the base of the wall (41, 70) which externally forms the lower section of the hood.

10. Device according to Claims 8 and 9, characterised in that the hood comprises an inner wall (68, 71) which is cylindrical or prismatic and of which the cross-section is equal to or less than that of the central passage of the extrusion head (or heads), and which extends from the edge of the opening (63) at the top of the hood to the base of the wall (70) which externally forms the lower section of the hood, the upper section (68) of said inner wall being perforated by a large number of apertures (69).

11. Device according to Claim 2, characterised in that it comprises at least one blower device comprised of one or more fluid supply ducts (59) connected to one or more conduits (60) which are disposed above said extrusion head (or heads) (51) and which extend along the side wall of said head (or heads) delimiting the central passage and leading to an opening or a large number of openings (61) directed towards the organic filament forming area.

12. Device according to Claim 11, characterised in that the end of the conduit or conduits (60) terminates in at least one slot (61) which opens below the lower face of said head (or heads) (51).

13. Device according to Claim 11, characterised in that the end of the conduit or conduits (60) terminates in at least one gaseous fluid detent chamber (75), of which the wall (76) directed towards the organic filament forming area (56) is perforated by a large number of apertures (77) over at least part of its height or is formed from one or more layers of metal fabric or porous material over at least part of its height.

14. Device according to Claim 13, characterised in that the wall (78) of the detent chamber, directed towards the central passage, likewise forms at least part of an inner cylindrical or prismatic wall, of which the cross-section is equal to or less than that of the central passage and which extends from the top of said passage to at least the wall (70) which externally forms the lower section of the hood.

15. Device according to any one of Claims 2 to 10, characterized in that it comprises at least one gaseous fluid blowing device, formed by at least one conduit (79) for supplying said fluid and terminating in at least one detent chamber (80) for said fluid disposed at the periphery of the organic filament forming area (56), said chamber comprising a wall (82) turned towards said area and perforated by a large number of apertures over at least part of its height or formed from one or more layers of metal fabric or porous material over at least part of its height.

16. Device according to Claim 15, characterized in that the fluid detent chamber (80) comprises an external wall (81) which extends downwards, at least over part of its height, the outer wall (70) forming the lower section of the hood.

17. Device according to Claim 1, characterised in that the second installation comprises one or more extrusion heads (84) of which the location or shape over their entire height comprises a lateral passage (90) between the exterior of said installation and the central passage (86) of said head or heads; and in that it comprises a hood and a blower device which, over their entire height, comprise a lateral passage in the extension of the lateral passage of said head or heads.

## Patentansprüche

1. Vorrichtung zur Herstellung eines Verbundfadens (31, 50, 73), welche einerseits aus einer ersten Einrichtung, umfassend wenigstens eine Spinndüse (10, 35), die mit Glas versorgt und durch Widerstandserhitzung beheizt wird und deren Unterseite mit einer Vielzahl von Öffnungen versehen ist, von denen ausgehend kontinuierliche Filamente (11, 36, 72) gezogen werden, und andererseits aus einer zweiten Einrichtung besteht, umfassend einen (oder mehrere) Spinnkopf (Spinnköpfe) (42, 51, 84), der (die) mit unter Druck befindlichem, geschmolzenem thermoplastischem Kunststoff versorgt ist (sind) und der einen zentralen Durchgang enthält (oder den sie begrenzen), durch welchen die Glasfilamente (11, 36, 72) gezogen werden, wobei diese(r) Spinnkopf (Spinnköpfe) (42, 51, 84) wenigstens eine Versorgungsleitung (25, 43, 52) für den Kunststoff umfaßt, **dadurch gekennzeichnet, daß** diese Leitung mit einer Kammer (53) verbunden ist, die auf ihrer Unterseite in eine Vielzahl von Öffnungen (55) mündet, durch welche der Kunststoff extrudiert wird und somit durch den Ziehvorgang kontinuierliche Filamente (28, 47, 56) entstehen, wobei der (oder die) Spinnkopf (Spinnköpfe) von einer Abdeckhaube geschützt wird (werden), deren Oberteil über diesem (diese) Spinnkopf (Spinnköpfe) anpaßt ist und außen die Form eines Kastens (23, 40, 62) aufweist, der auf seinem Scheitel mit einer Öffnung (27, 44, 63) versehen ist, die sich in der Achse des zentralen Durchgangs befindet, und deren Unterteil aus einer Wandung (24, 41, 70) besteht, die den (oder die) Spinnkopf (Spinnköpfe) umgibt und sich bis unter die Ebene der Unterseite dieses (oder dieser) Spinnkopfs (Spinnköpfe) erstreckt.

2. Vorrichtung zur Herstellung nach Anspruch 1, **dadurch ge-kennzeichnet, daß** das Unterteil der Abdeckhaube wenigstens teilweise eine Blaseinrichtung für ein gasförmiges Fluid schützt, deren Ende(n) mit einer Öffnung oder einer Vielzahl von Öffnungen (61, 77) versehen ist (sind), die sich in Richtung der Entstehungszone der organischen Filamente (56) öffnet (öffnen), wobei sich das (oder die) Ende(n) zwischen dem zentralen Durchgang und dieser Zone und/oder zwischen der unteren Wandung der Abdeckhaube (70) und dieser Zone befindet (befinden).

3. Vorrichtung nach Anspruch 1, **dadurch gekennzeichnet, daß** das Oberteil der Abdeckhaube außen aus einer oder mehreren Platten (23, 40, 62) besteht, die in bezug auf die senkrechte Achse des zentralen Durchgangs geneigt sind.

4. Vorrichtung nach Anspruch 3, **dadurch gekennzeichnet, daß** das Oberteil der Abdeckhaube die Form eines Kegelstumpfs (23, 40, 62) oder Prismenstumpfs aufweist.

5. Vorrichtung nach Anspruch 3 oder 4, **dadurch gekennzeichnet, daß** das Oberteil der Abdeckhaube mit wenigstens einer seitlichen Öffnung (65) ausgestattet ist.

6. Vorrichtung nach Anspruch 5, **dadurch gekennzeichnet, daß** die seitliche(n) Öffnung(en) (65) aus einem Schlitz oder einer Reihe von Schlitzen besteht (bestehen).

7. Vorrichtung nach einem der Ansprüche 3 bis 6, **dadurch ge-kennzeichnet, daß** das Oberteil der Abdeckhaube an seinem Boden mit einer Platte (66) verschlossen ist, die über dem Spinnkopf (den Spinnköpfen) (51) angepaßt und in ihrer Mitte mit einer Öffnung (64) versehen ist, die sich in der Achse des zentralen Durchgangs befindet.

8. Vorrichtung nach einem der Ansprüche 3 bis 7, **dadurch ge-kennzeichnet, daß** das Oberteil der Abdeckhaube eine mit Öffnungen (69) durchbohrte Innenwand (68) enthält, die im Inneren der Abdeckhaube vom Rand der Öffnung (63), die sich auf dem Scheitel der Abdeckhaube befindet, bis zum Scheitel des zentralen Durchgangs des (oder der) Spinn-kopfs (Spinnköpfe) oder bis zum Rand der Öffnung (64) der Platte, die den Boden des Oberteils verschließt, verläuft.

9. Vorrichtung nach Anspruch 1 oder 2, **dadurch gekennzeichnet, daß** die Abdeckhaube eine ununterbrochene Innenwand (46, 71) enthält, deren Querschnitt gleich dem oder kleiner als der des zentralen Durchgangs des (oder der) Spinnkopfs (oder der Spinnköpfe) ist und die vom Scheitel dieses zentralen Durchgangs oder vom Rand der Öffnung (64) der Platte (66), die den Boden des Oberteils der Abdeckhaube verschließt, bis wenigstens zur Ebene des Bodens der Wand (41, 70), aus welcher das äußere Unterteil der Abdeckhaube besteht, verläuft.

10. Vorrichtung nach den Ansprüchen 8 und 9, **dadurch gekenn-zeichnet, daß** die Abdeckhaube eine zylinderförmige oder prismatische Innenwand (68, 71) enthält, deren Querschnitt gleich dem oder kleiner als der des zentralen Durchgangs des (oder der) Spinnkopfs (oder der Spinnköpfe) ist und die vom Rand der Öffnung (63), die sich auf dem Scheitel der Abdeckhaube befindet, bis zur Ebene der Grundfläche der Wandung (70) verläuft, aus welcher das äußere Unterteil der Abdeckhaube besteht, wobei der obere Bereich (68) der Innenwand mit einer Vielzahl von Öffnungen (69) durchbohrt ist.

11. Vorrichtung nach Anspruch 2, **dadurch gekennzeichnet, daß** sie wenigstens eine Blaseinrichtung umfaßt, die aus einer oder mehreren Zuführrohrleitung/en (59) für Fluid besteht, welche mit einer oder mehreren Leitung/en (60) verbunden ist/sind, die über dem (oder den) Spinnkopf (Spinnköpfen) (51) angeordnet ist/sind, entlang der Seitenwand dieses (oder dieser) Spinnkopfs (Spinnköpfe) verlaufen, der/die den zentralen Durchgang begrenzt/begrenzen, und in einer Öffnung oder Vielzahl von Öffnungen (61) endet/enden, die auf die Entstehungszone der organischen Filamente gerichtet ist/sind.

12. Vorrichtung nach Anspruch 11, **dadurch gekennzeichnet, daß** das Ende der Leitung/en (60) mit wenigstens einem Schlitz (61) abschließt, der sich unterhalb der Ebene der Unterseite des (oder der) Kopfs (Köpfe) (51) öffnet.

13. Vorrichtung nach Anspruch 11, **dadurch gekennzeichnet, daß** das Ende der Leitung/en (60) in wenigstens eine Entspannungskammer (75) für gasförmiges Fluid mündet, deren auf die Entstehungszone der organischen Filamente (56) gerichtete Wand (76) in wenigstens einem Teil ihrer Höhe mit einer Vielzahl von Öffnungen (77) durchbohrt ist oder in wenigstens einem Teil ihrer Höhe aus einer oder mehreren Schicht/en aus Drahtgewebe oder porösem Material besteht.

14. Vorrichtung nach Anspruch 13, **dadurch gekennzeichnet, daß** die zum zentralen Durchgang gerichtete Wand (78) der Entspannungskammer auch wenigstens einen Teil einer zylinderförmigen oder prismatischen Innenwand bildet, deren Querschnitt gleich dem oder kleiner als der des zentralen Durchgangs ist und die vom Scheitel dieses Durchgangs bis zu wenigstens der Ebene der Wandung (70), aus welcher das äußere Unterteil der Abdeckhaube besteht, verläuft.

15. Vorrichtung nach einem der Ansprüche 2 bis 10, **dadurch ge-kennzeichnet, daß** sie wenigstens eine Blaseinrichtung für ein gasförmiges Fluid umfaßt, die aus wenigstens einer Zuführleitung (79) für das Fluid besteht, welche in wenigstens eine Entspannungskammer (80) für das Fluid mündet, die am Rand der Entstehungszone der organischen Filamente (56) angeordnet ist, wobei diese Kammer eine auf diese Zone gerichtete Wand (82) besitzt, die in wenigstens einem Teil ihrer Höhe mit einer Vielzahl von Öffnungen durchbohrt ist oder in wenigstens einem Teil ihrer Höhe aus einer oder mehreren Schicht/en aus Drahtgewebe oder porösem Material besteht.

16. Vorrichtung nach Anspruch 15, **dadurch gekennzeichnet, daß** die Entspannungskammer (80) des Fluids eine Außenwand (81) aufweist, die auf wenigstens einem Teil ihrer Höhe die Außenwandung (70), die das Unterteil der Abdeckhaube bildet, verlängert.

17. Vorrichtung nach Anspruch 1, **dadurch gekennzeichnet, daß** die zweite Einrichtung einen oder mehrere Spinnköpfe (84) umfaßt, deren Anbringung oder Form zwischen der Außenseite dieser Anbringung und dem zentralen Durchgang (86) des Kopfes oder der Köpfe auf ihrer gesamten Höhe einen seitlichen Durchgang (90) aufweist, **und daß** sie eine Abdeckhaube und eine Blaseinrichtung umfaßt, die auf ihrer gesamten Höhe einen seitlichen Durchgang in Verlängerung des seitlichen Durchgangs des Kopfes oder der Köpfe aufweisen.
